# EUROPEAN PATENT SPECIFICATION

(11) **EP 1 885 096 B1**
(45) Date of publication and mention of the grant of the patent: **04.07.2012**
(21) Application number: 06291258.9
(22) Date of filing: 01.08.2006
(51) Int. Cl.: H04L 29/06, H04L 12/66

(54) **Application session border element**
Application session border Einheit
Serveur pour contrôler les frontières de sessions

(43) Date of publication of application: 06.02.2008
(73) Proprietor: Alcatel Lucent, 75007 Paris (FR)
(72) Inventor: Shen, Yuzhong, Dipl.-Ing., 70499 Stuttgart (DE); Domschitz, Peter, Dipl.-Ing., 70191 Stuttgart (DE); Tomsu, Marco, Dipl.-Ing., 71254 Ditzingen (DE); Lemke, Andreas, 70195 Stuttgart (DE)
(74) Representative: Wetzel, Emmanuelle

(56) References cited:
- US-A1- 2006 075 483
- US-A1- 2006 146 792
- "SESSION BORDER CONTROL MAKING DREAMS REALITY" TELECOMMUNICATIONS, DEDHAM, MA, US, vol. 37, no. 9, September 2003 (2003-09), pages S01-S08, XP008052274 ISSN: 0040-2494

## Description

The present invention relates to a method of providing a session server of a communication service provider network with application services, and an application session border element to execute said method.

The provision of application services to telecommunication clients is an important issue regarding the competitiveness of communication service networks. Useful application services such as time-dependent call forwarding or televoting have the power to attract many subscribers. Many communication networks such as IN networks comprise an interface between a call server and one or more network-internal application servers (IN = Intelligent Network).

A Session Border Controller (= SBC) is a device used in some VoIP (= Voice over Internet Protocol) networks. SBCs are put into the signalling path between a calling and a called party. The SBC acts as if it was the called VoIP phone and places a second call to the called party. The effect of this behaviour is that not only the signalling traffic but also the media traffic (voice, video, etc.) crosses the SBC. Without an SBC, the media traffic travels directly between the VolP phones. Private SBCs are used along with firewalls to enable VolP calls to and from a protected enterprise network. Public VolP service providers use SBCs to allow the use of VolP protocols from private networks with internet connections using NAT (= Network Address Translation). Moreover, SBCs usually may provide peering tasks, too.

An example can be found in US 2006/146 792.

It is the object of the present invention to improve the provisioning of application services in communication networks.

The object of the present invention is achieved by a method of providing a session server of a communication service provider network with application services, whereby the method comprises the steps of routing an application service request used by the session server for invoking an application service towards an application session border element of said communication service provider network, mapping, by the application session border element, the application service request to an appropriate application service provided by a foreign application service provider, establishing a service session between the session server of the communication service provider network and an application server of the foreign application service provider and routing the traffic associated with said service session through the application session border element to said application server, and monitoring and controlling, by the application session border element, the service session to ensure that the service session complies with a set of preset parameters. Moreover, the object of the present invention is achieved by an application session border element for providing a session server of a communication service provider network with application services, wherein the application session border element comprises a network interface adapted to receive an application service request used by the session server for invoking an application service, and a control unit adapted to map the application service request to an appropriate application service provided by a foreign application service provider, invoke said application service for establishing a service session between the session server of the communication service provider network and an associated application server of the foreign application service provider, forward the traffic associated with said service session towards said application server, and monitor and control the service session to ensure that the service session complies with a set of preset parameters.

A session server is a server related to a session of a communication service. The session server, e.g., provides signaling, control, media transport as well as service functions required for the session. A session server of a network may be a call server or an application server of the network.

The present invention provides a bi-directional communication between two networks, a first and a second network. In a first case, the first network may serve as a communication service provider network and the second network may serve as a foreign application service provider. In another case, the first network may serve as a foreign application service provider and the second network may serve as a communication service provider network. That means that the application session border element allows a communication in both directions between two attached networks.

The invention breaks the limitation of application services to network-internal application servers. The invention provides a secured interconnection of a communication service provider network, e.g., an IMS-based network, to untrusted third party application servers located in foreign ASP domains (IMS = IP Multimedia Subsystem; IP = Internet Protocol; ASP = application service provider). This is achieved by protecting the border to ASPs by special elements to allow a secure / tunneled intercommunication across all involved layers, i.e., application, signaling/control and media/data.

With the term "secured" in the sense of the invention, it is not meant to express that encryption techniques or other security means are provided, but "secured" is meant to express that a safe connection to a foreign, un-trusted application service domain is established and dangers threatening the communication service provider network, e.g., attacks originating in the foreign, un-trusted domain, are eliminated by means of the secure intercommunication.

The invention allows to access untrusted ASPs across domain borders and to offer a multitude of applications to subscribers of a communication service provider network which is particularly attractive in an IMS environment. The secured connection to the ASP prevents attacks originating from a contracting party's network.

Another advantage of the present invention is that the application session border (= ASB) element provides a network hiding or topology hiding. Therefore, a foreign network attached to the ASB element is not able to "see" any network element located behind the ASB element or to notice another network also attached to the ASB element.

The invention extends the firewall and gateway features providing security capabilities to the integrated processing of NGN/IMS signaling, application server interconnection and media transport (NGN = Next Generation Network).

Because SIP usually cannot be used for accessing applications in un-trusted domains, IMS specifies to use OSA/Parlay gateways for this purpose (SIP = Session Initiation Protocol; OSA = Open Service Access). Parlay and OSA is a technology enabling the creation and provision of telecommunication services. It extends these capabilities from network operators to third party service providers.

However, the present invention allows a session server to communicate across an unsecure domain border via SIP. The application session border element according to the present invention supports SIP capabilities, i.e., it allows to use SIP - an end-to-end protocol - as application protocol to an application server in an un-trusted domain, representing the simplest way for accessing an application.

Moreover, high data rate media-related applications are enabled and no complex network abstraction is required. The ASB elements provide - SIP aware - firewall/NAT SLA assurance, QoS, session and media replication and routing for lawful interception features (SLA = Service Level Agreement; QoS = Quality of Service).

Further advantages are achieved by the embodiments of the invention indicated by the dependent claims.

The ASB element may be any of the following four main types. First, the ASB element may be a gateway/firewall between application servers, e.g., for XML protocol-based applications like web services, Parlay. etc (XML = Extensible Markup Language). Second, the ASB element may be a call server gateway/ firewall, optionally with application server gateway/firewall, e.g., used for SIP intercommunication, enriched with application server protocols. Third, the ASB element may be an application server gateway/firewall plus a packet transport/ media gateway/firewall, and optionally a call server gateway/firewall, e.g., for web service applications and related media and data streams. Fourth, the ASB element may be a call server gateway/firewall plus a packet transport/ media gateway/firewall, e.g., for SIP signalling plus media and data streams.

According to a preferred embodiment of the invention, the ASB processes the application service request and provides an associated application service request directed to an application server or an application session border element of the foreign application service provider assigned to the application service.

According to another preferred embodiment of the invention, an application session border element of a foreign application service provider processes the application service request and provides an associated application service request to an appropriate application server of said foreign application service provider. The network traffic associated with said service session is routed through the application session border element of the communication service provider network and through the application session border element of the foreign application service provider to said application server.

According to another preferred embodiment of the invention, the control unit provides unified authentication procedures. The control unit may be adapted to examine whether the session server and/or a client of the communication service is authorized to use a requested application service and prevent the establishment of the service session if it is not authorized. It is also possible that the control unit initiates a traffic separation, e.g., a special handling of beta services under test or for minimum trust scenarios.

Preferably, the control unit also provides a topology hiding of the internal network infrastructure of the communication service provider network. Providing a functionality of a firewall and/or gateway, the ASB element also conducts NAT so that internal information about a network are not laid open to any foreign, untrusted clients.

In a preferred embodiment, the control unit provides inter-working functions such as control protocol and media format adaptations. Thus, the call server and the application server connected in a service session may use different protocols and media formats and still be able to intercommunicate.

According to another preferred embodiment of the invention, the ASB element provides a policy control. It may control the data rate and content of both signalling intercommunication and media. Thus, the ASB element may assure a load balancing and an overload protection for services, signalling and media/ data streams. This may assure a specific QoS and SLAs. Furthermore, the ASB element may also provide billing records. In short, the ASB element controls all layers of intercommunication between a call server and an application server according to preset parameters, e.g., defined as SLA or QoS.

Preferably, the ASB element communicates with a call server of an internet protocol multimedia subsystem network. It is also possible that the ASB element communicates with a network element associated with the service session using the session initiation protocol.

Preferably, the ASB element handles the service session related traffic on all layers, i.e., the traffic routed between said call server and said application server on the application layer, the signalling/control layer, and the media layer.

According to another preferred embodiment of the invention, the ASB comprises a database. The database may be implemented as a separate device comprising the storage facilities, such as shown in the following embodiments. It is also possible that the database is an integral part of the ASB element. The database stores address data and information regarding the mapping of application service requests to an appropriate application service, e.g., an associated application service request or application server.

Preferably, the ASB element operates in a SIP environment. The idea of a SIP Application Session Border is to define a special session border, which is only for connecting a communication network to an application server in an untrusted domain. Preferably, it supports the functions of a firewall and executes NAT (aware of SIP and RTP), provides an integrated support of IP connection via internet (IPSec = IP Security), and operates as an integrated SIP proxy, e.g., as SIP router between different network (RTP = Realtime Transport Protocol). Preferably, the ASB element accepts registration from a SIP application server and routing switches. Moreover, the SIP ASB element provides overload control based destination IP addresses for protecting the application server, overload control based SIP To Header to limit service calls per second, and a control of call setup and third party call setup by limiting calls to softswitches and limiting destination addresses.

The SIP routing is performed mainly under policy control, i.e., by choosing to accept an incoming invite or not, determining which SIP nodes are allowed to receive and send SIP messages, and a black and white list for external nodes. The SIP ASB element supports RTP routing to support media resources in external networks and billing records for SIP applications.

These as well as further features and advantages of the invention will be better appreciated by reading the following detailed description of presently preferred exemplary embodiments taken in conjunction with accompanying drawings of which:
- Fig. 1: is a block diagram of a communication service provider network connected to a domain of an application service provider by means of ASB elements.
- Fig. 2: is a message flow diagram showing processing steps related to a service request according to an embodiment of the invention.
- Fig. 3: is a detailed view of a communication service provider network comprising several ASB elements.
- Fig. 4: is a block diagram of two communication service provider networks connected to a domain of an application service provider by means of ASBs.
- Fig. 5: is a block diagram of two networks connected to each other by means of ASB elements.

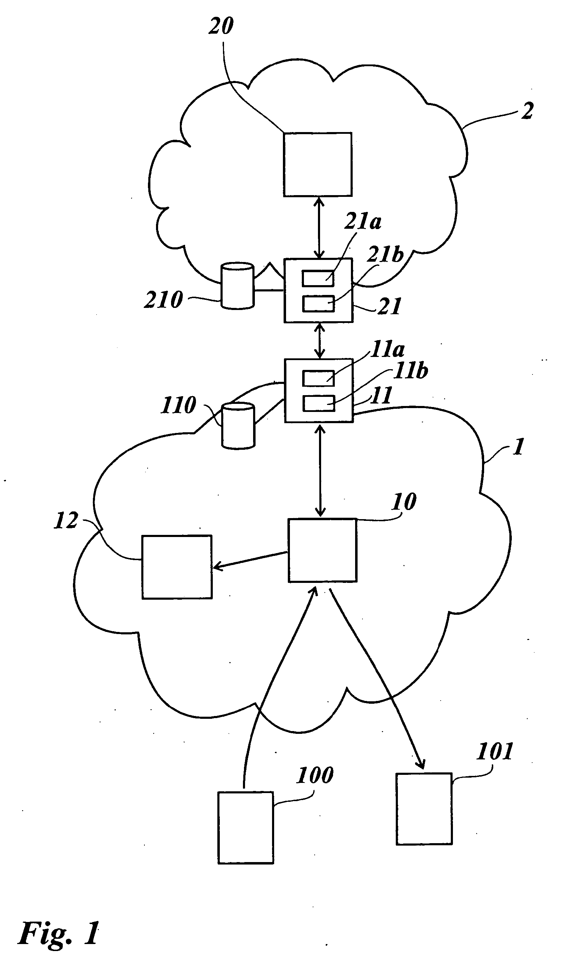

Fig. 1 shows a communication service provider network 1 providing communications services to a calling client 100 and a called client 101. The communication service provider network 1 may be an IMS network operated by a network operator and represent a domain, e.g., an operator's core network domain. The communication service provider network 1 comprises a call server 10 for managing calls through the communication service provider network 1. The communication service provider network 1 further comprises an application server 12 for providing simple application services such as call forwarding or telephone mailbox services.

The call server 10 and the application server 12 are composed of one or several interlinked computers, i.e., a hardware platform, a software platform basing on the hardware platform and several application programs executed by the system platform formed by the software and hardware platform. The functionalities of the servers 10 and 12 are provided by the execution of these application programs. The application programs or a selected part of these application programs constitute a computer software product providing a call control service and an application service, respectively, as described in the following, when executed on the system platform. Further, such computer software product is constituted by a storage medium storing these application programs or said selected part of application programs.

Fig. 1 further shows an application service provider network 2 operated by a different operator than the communication service provider network 1. The application service provider network 2, which represents a separate domain, may be not trusted by the operator of the communication service provider network 1. The application service provider network 2 comprises an application server 20 serving one ore more applications to be utilized by clients of the communication service provider network 1.

For providing a secured interconnection of the operator's communication service provider network 1 to the untrusted application server 20 located in the foreign application service provider domain 2, the communication service provider network 1 comprises an ASB element 11 with a database 110 and the application service provider domain 2 comprises an ASB element 21 with a database 210.

From a functional point of view, the ASB elements 11 and 21, respectively, comprise network interfaces 11 a and 21 a, respectively, for communication with the attached communication service provider network 1 and the application service provider domain 2 and control units 11 b and 21 b, respectively, for controlling the functions of the ASB elements 11 and 21, respectively.

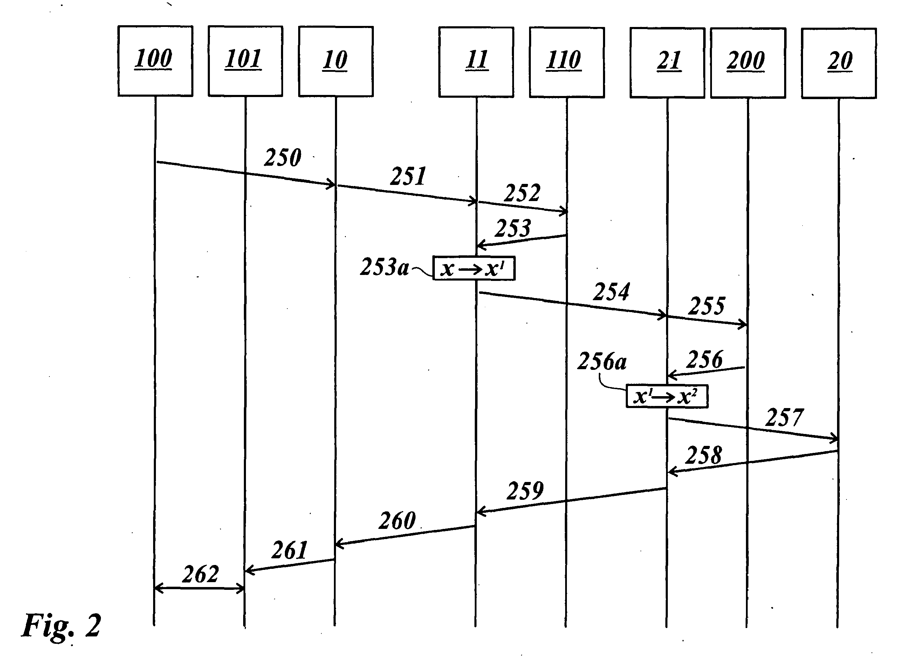

Fig. 2 shows a message flow diagram of an exemplary communication according to a first embodiment of the invention. Fig. 2 shows a calling client 100 and a called client 101, a call server 10 of a communication service provider networkproviding communication services to the calling client 100 and the called client 101, an ASB element 11 implemented into the communication network, a database 110 associated with the ASB element 11, an ASB element 21 implemented into an application service provider network, a database 210 associated with the ASB element 21, and an application server 20 of the application service provider network.

Let us assume that the calling client 100, e.g., a telephone used by a casualty person, is used to establish an emergency call to a called client 101, e.g., a telephone at a PSAP call center (PSAP = Public Safety Answering Point). The clients 100, 101 may any communication devices, preferably devices for realtime communications, e.g., telephones or video conferencing tools. In a preferred embodiment, the clients 100, 101 and the network elements shown in Fig. 2 allow a communication on the basis of the SIP protocol. For example, the clients 100, 101 may be VoIP phones.

The calling client 100 sends, triggered by a user of the calling client 100, a call initiation message 250, e.g., a SIP message, to the call server 10. The call initiation message 250 comprises a call origin address, i.e., an address associated to the calling client 100, a call destination address, i.e., an address associated to the called client 101, and a type ID indicating the type and/or priority of the call to be established. The call server 10 recognizes by means of the mentioned type ID that the intended call is an emergency call. A call policy implemented in the call server 10 states that an emergency call must comprise location data specifiying a location of the calling client 100. Through this policy, it is assured that a PSAP personnel is enabled to unfailingly locate a requesting party.

A corresponding trigger set in the call server 10 causes the call server 10, after reception of the call initiation message 250, to interrupt the traffic flow, e.g., packets for signalling/control and media/data, associated with the call establishment and to access an application for providing the location information.

The call server 10 sends a message 251 to the ASB element 11 of the communication network. The ASB element 11 recognizes from the received message 251 that location information of the calling client 100 are to be retrieved and accesses the database 110 associated with the ASB element 11 to look up an address of a corresponding application service delivering the wanted location information. An address of a corresponding application service is found in the database 110 and transmitted, in step 253, to the ASB element 11. For example, the address identifies an application service provider network where such application services are provided. Then, in step 253a, the ASB element 11 maps the address x of the service request to the new address x1 received from the database 110.

Therefore, a message 254 is sent from the ASB element 11 across the domain border to the ASB element 21 of the application service provider network. The message 254 indicates the wanted application service and the address associated to the calling client 100. The ASB element 21, after reception of the message 254, consults, by sending a message 255 to the database 210 associated with the ASB element 21, the database 210 to look up an address of a network element of the application service provider network which provides the requested service. An address of a corresponding application server is found in the database 210 and transmitted, in step 256, to the ASB element 21. For example, the address identifies an application server 20 providing a location service. Then, in step 256a, the ASB element 21 maps the hitherto address x1 of the service request to the address x2 of the application server 20 received from the database 110.

The ASB element 21 sends a message 257 to the identified application server 20 to trigger the application server 20 to provide the application. The application server 20 retrieves location information associated with the calling client 100. In case the client 100 is a fixed device, the application server 20 may consult a telephone directory to extract the postal address associated with the calling client 100. In case the client 100 is a mobile device, the application server 20 may apply any of the known localization methods, e.g., a triangulation method based on signal runtime differences or a GPS based method, to retrieve a localization information, e.g., geographic coordinates, of the calling client 100 (GPS = Global Positioning System).

The retrieved location information is sent in a message 258 from the application server 20 back to the ASB element 21. The ASB element 21 recognizes, e.g., by means of a message ID, that the received message 258 is a reply to the related inquiry message 257 and forwards the location information as message 259 accross the domain border back to the ASB element 11. Again, the ASB element 11 recognizes, e.g., by means of a message ID, that the received message 258 is a reply to the related inquiry message 254 and forwards the location information as message 260 back to the call server 10.

The call server 10, after receiving the location information comprised within the message 260, recognizes that the location information required for an emergency call has been provided and that the interrupted emergency setup call originating from the calling client 100 can be resumed. Thus, the call server 10 continues the traffic flow associated with the call establishment and sends a corresponding call establishment message 261 comprising - in addition to the information already contained within the message 250 - the location information to the called client 101.

After the called client 101 has received the message 261 and has confirmed that it wants to accept the incoming call, a communication connection between the calling client 100 and the called client 101 is established through the communication network. The calling client 100 can execute the emergency call to the called client 101 which has already been provided with the location information of the calling client 100.

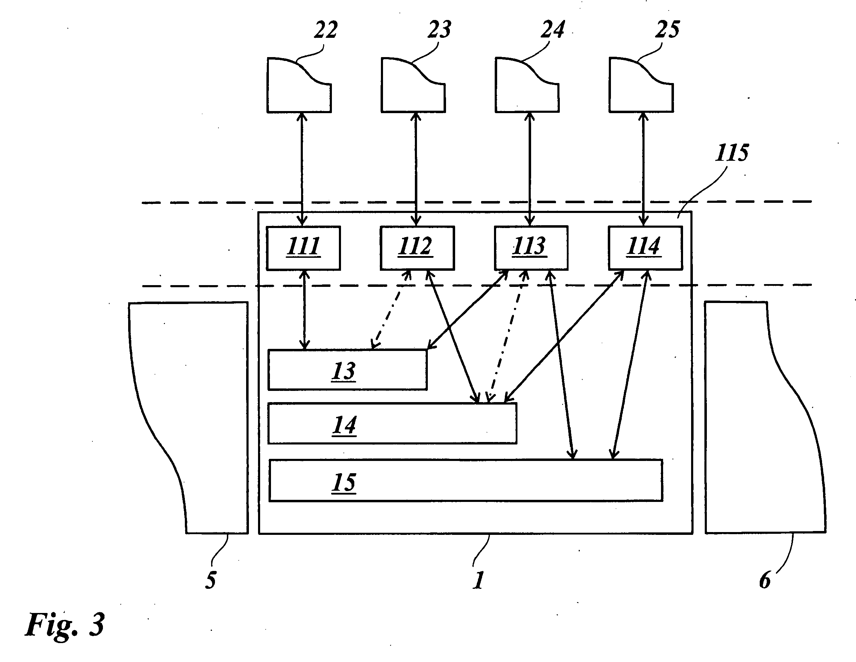

Fig. 3 shows a detailed view of a communication service provider network 1 with a secured application session border 115 comprising several ASB elements 111 to 114. The communication service provider network 1 may be a core network domain used for the transmission of communication data. Subscibers of the communication service offered by the operator of the communication service provider network 1 can use the resources of the communication service provider network 1 through an access network domain 5 or another network operator domain 6.

The communication service provider network 1 comprises network units such as one or more application servers 13, one or more call control servers 14 (or, more shortly, call servers), and network elements/resources 15 for the packet transport and media processing. The network units 13, 14, 15 are connected to the ASB elements 111 to 114 for a secured intercommunication with an application server 22 to 25 of third party application service providers and their assciated domains, respectively.

In particular for the case that the application service provider domains hosting the application servers 22 to 25 are not trusted by the provider of the communication service provider network 1, the ASB elements 111 to 114 comprise means for guarding, protecting and keeping an application service session under surveillance.

Fig. 3 shows that a ASB elements 111 to 114 may handle traffic on one or more layers of the application, control and media transport layer.

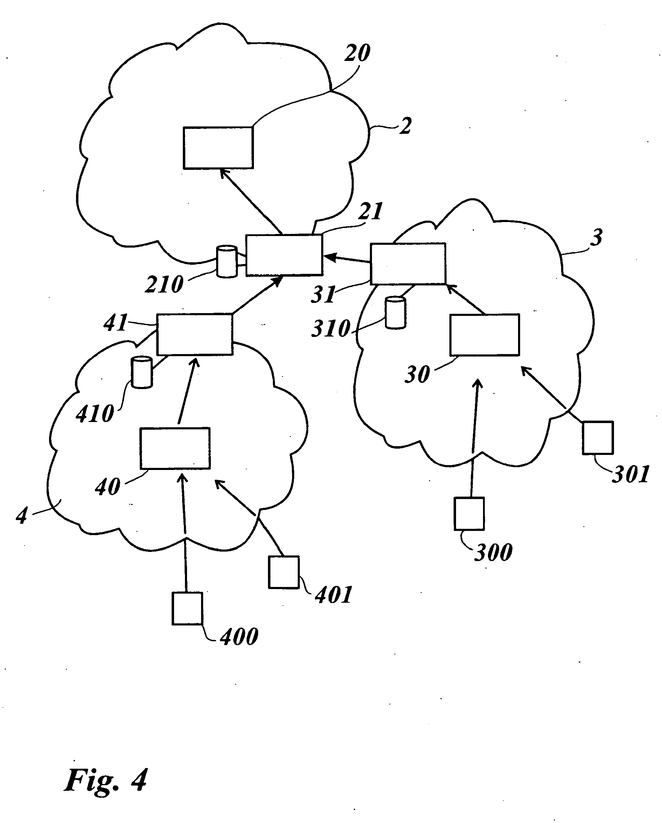

Fig. 4 shows a first and a second communication service provider network 3 and 4 providing communications services to clients 300, 301, 400, 401. The communication service provider network 3 comprises a call server 30 and an ASB element 31 with an associated database 310. Likeswise, the communication service provider network 4 comprises a call server 40 and an ASB element 41 with an associated database 410. The first and a second communication service provider network 3 and 4 are provided by different operators.

Fig. 4 further shows an application server 20 provided by a foreign application service provider in an application service provider domain 2. The application service provider domain 2 can be accessed through an ASB element 21 with associated database 210.

The users of the clients 300, 301, 400, 401 want to participate in a televoting advertised by the operators of the first and a second communication service provider network 3 and 4. The first and a second communication service provider network 3 and 4 provide the clients 300, 301, 400, 401 with access to the communication service but the televoting service itself is provided by the application server 20. The operators of the first and a second communication service provider network 3 and 4 notify subscribers of the first and a second communication service provider network 3 and 4 about telephone numbers to be called to participate in the televoting whereby the telephone numbers comprise two or more different numbers one of which may be selected to express a vote.

Each user of the clients 300, 301, 400, 401 dials a specific televoting number on their associated clients 300, 301, 400, 401. Triggered by the dialled numbers, the clients 300, 301, 400, 401 set up televoting calls in the respective first and second communication service provider network 3 and 4. The televoting calls are received by the call servers 40, 50. After recognition that the received calls relate to the advertised televoting service, the call servers 40, 50 initiate televoting service requests for invoking an application service. The televoting service requests are forwarded through the first and second communication service provider network 3 and 4 to the respective ASB elements 31, 41. The ASB elements 31, 41 consult the associated databases 310 and 410 to find an address associated with the requested televoting service.

The ASB elements 31, 41 map the televoting service requests to a televoting service request directed to the ASB element 21 of the foreign application service provider network 2 assigned to the televoting service. For example, the databases 310 and 410 retrieve an address of the ASB element 21 which is registered to be the appropriate ASB element regarding televoting requests.

The ASB element 21 accesses the database 210 and looks for an address of an application server which provides the requested televoting service. The ASB element 21 maps, after receiving an address of the application server 20 from the database 210, the televoting service requests to the application server 20. Once the application server 20 has received the televoting service requests, a service session through the application session border elements 310, 410 of the communication service provider networks 3, 4 and through the application session border element 21 of the foreign application service provider network 2 to the call servers 30, 40 is established. The clients 300, 301, 400, 401 are provided - through the established service session - with the televoting servive offered by the application server 20. The traffic associated with the service session is routed on this route and the televoting can be executed.

After the execution of the televoting service, the service session is terminated and the connections are released. To summarize, the ASB element 21 of an application service provider is accessible from different communication service provider networks 3, 4, preferably also synchronously and in parallel.

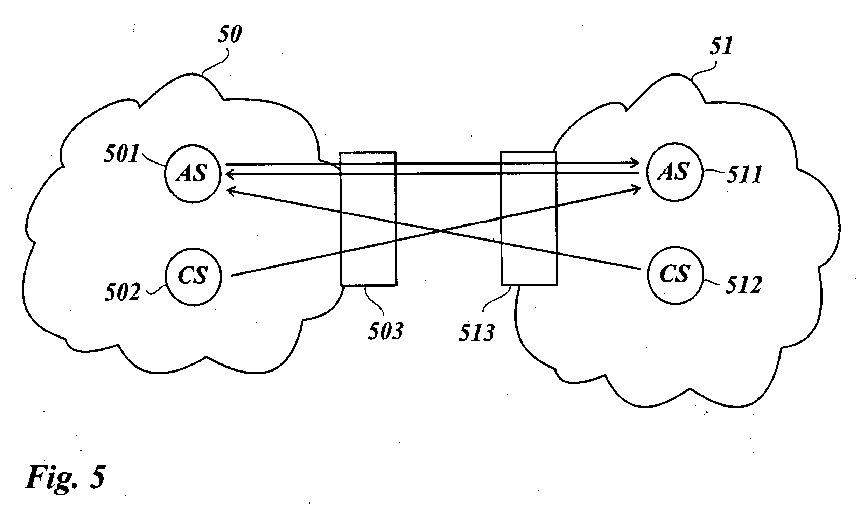

Fig. 5 shows a first network 50 and a second network 50 and 51. The first network 50 comprises an ASB element 503, an application server 501 and a call server 502. Likewise, the second network 51 comprises an ASB element 513, an application server 511 and a call server 512. According to the present invention, the application server 501 or the call server 502 of the first network 50 may contact the application server 511 of the second network 51 through the ASB elements 503 and 513. Moreover, also the application server 511 or the call server 512 of the second network 51 may contact the application server 501 of the first network 51 through the ASB elements 513 and 503.

Thus, Fig. 5 illustrates that the ASB elements 503 and 513, according to the invention, allow a bi-directional access to application services provided by the networks 50 and 51. Either network 50 and 51 may contact the other network 50 and 51 through the ASB elements 503 and 513.

The following is an exemplary use case for a SIP ASB element providing a secure network access. An application service provider provides a schedule that can make appointment calls. The application in the public Internet will send a call to a subscriber on a matched time point for an appointment notification or an appointment call with a user B. The corresponding signaling will be done in SIP. The SIP ASB element can check if the application server is allowed or not and if a SIP message is valid. Moreover, the SIP ASB element may check if all required header are there and/or if a charging ID is available (ID = Identification).

The SIP application server forwards the application message to a switch in an operator domain, whereby the following action may required: topology hiding and call limitation for overload protection. A call might be established between the two subscriber domains under control by an application in the public internet.

## Claims

1. A method of providing a session server (10) of a communication service provider network (1) with application services, the method comprising the steps of:
routing an application service request used by the session server (10) for invoking an application service towards an application session border element (11) of said communication service provider network (1);
mapping, by the application session border element (11), the application service request to an appropriate application service provided by a foreign application service provider;
mapping, by the application session border element (11), the application service request to an application service request directed to an application server (20) or an application session border element (21) of the foreign application service provider assigned to the application service;
mapping, by the application session border element (21) of the foreign application service provider, the application service request to an appropriate application server (20) of said foreign application service provider;
establishing a service session between the session server (10) of the communication service provider network (1) and an application server (20) of the foreign application service provider and routing the traffic associated with said service session through the application session border element (11) to said application server (20);
routing the traffic associated with said service session through the application session border element (11) of the communication service provider network (1) and through the application session border element (21) of the foreign application service provider to said application server (20); and
monitoring and controlling, by the application session border element (11), the service session to ensure that the service session complies with a set of preset parameters.

2. An application session border element (11) for providing a session server (10) of a communication service provider network (1) with application services, wherein the application session border element (11) comprises a network interface (11a) adapted to receive an application service request used by the session server (10) for invoking an application service, and a control unit (11 b) adapted to map the application service request to an appropriate application service provided by a foreign application service provider, map the application service request to an application service request directed to an application server (20) or an application session border element (21) of the foreign application service provider assigned to the application service, invoke said application service for establishing a service session between the session server (10) of the communication service provider network (1) and an associated application server (20) of the foreign application service provider, route the traffic associated with said service session through the application session border element (21) of the foreign application service provider to said application server (20); forward the traffic associated with said service session towards said application server (20), and monitor and control the service session to ensure that the service session complies with a set of preset parameters.

3. The application session border element of claim 2,
**characterized in**
**that** the control unit (11 b) is further adapted to examine whether the session server (10) and/or a client (100, 101) of the communication service (1) is authorized to use a requested application service and prevent the establishment of the service session if it is not authorized.

4. The application session border element of claim 2,
**characterized in**
**that** the control unit (11 b) is further adapted to provide adaptations of control protocols and/or media formats used by the session server (10) and the application server (20) for said service session.

5. The application session border element of claim 2,
**characterized in**
**that** the control unit (11 b) is further adapted to control as preset parameters bandwidth rates and/or service level agreements associated with said service session.

6. The application session border element of claim 2,
**characterized in**
**that** the network interface (11a) is further adapted to communicate with a session server (10) of an internet protocol multimedia subsystem network or, based on the session initiation protocol, with a network element (10, 20, 21) associated with the service session.

7. The application session border element of claim 2,
**characterized in**
**that** the control unit (11 b) is further adapted to handle the traffic routed between said session server (10) and said application server (20) on the application layer, the signalling/control layer, and the media layer.

8. The application session border element of claim 2,
**characterized in**
**that** the application session border element (11) comprises a database (110) storing mapping information regarding the mapping of the application service request.

## Patentansprüche

1. Verfahren zum Bereitstellen eines Sitzungsservers (10) eines Kommunikationsdienstanbieter-Netzwerks (1) mit Anwendungsdiensten, wobei das Verfahren die folgenden Schritte umfasst:
Routen einer Anwendungsdienstanforderung, welche von dem Sitzungsserver (10) für den Aufruf eines Anwendungsdienstes verwendet wird, an ein Anwendungssitzungs-Border-Element (11) des besagten Kommunikationsdienstanbieter-Netzwerks (1);
Abbilden, durch das Anwendungssitzungs-Border-Element (11), der Anwendungsdienstanforderung auf einen von einem fremden Anwendungsdienstanbieter bereitgestellten geeigneten Anwendungsdienst;
Abbilden, durch das Anwendungssitzungs-Border-Element (11), der Anwendungsdienstanforderung auf eine Anwendungsdienstanforderung, welche an einen Anwendungsserver (20) oder an ein Anwendungssitzungs-Border-Element (21) des dem Anwendungsdienst zugeordneten fremden Anwendungsdienstanbieters gerichtet ist;
Abbilden, durch das Anwendungssitzungs-Border-Element (21) des fremden Anwendungsdienstanbieters, der Anwendungsdienstanforderung auf einen geeigneten Anwendungsserver (20) des besagten fremden Anwendungsdienstanbieters;
Aufbauen einer Dienstsitzung zwischen dem Sitzungsserver (10) des Kommunikationsdienstanbieter-Netzwerks (1) und einem Anwendungsserver (20) des fremden Anwendungsdienstanbieters, und Routen des mit der besagten Dienstsitzung assoziierten Verkehrs über das Anwendungssitzungs-Border-Element (11) an den besagten Anwendungsserver (20);
Routen des mit der besagten Dienstsitzung assoziierten Verkehrs über das Anwendungssitzungs-Border-Element (11) des Kommunikationsdienstanbieter-Netzwerks (1) und über das Anwendungssitzungs-Border-Element (21) des fremden Anwendungsdienstanbieters an den besagten Anwendungsserver (20); und
Überwachen und Steuern, durch das Anwendungssitzungs-Border-Element (11), der Dienstsitzung, um sicherzustellen, dass die Dienstsitzung einem Satz von Voreinstellparametern entspricht.

2. Anwendungssitzungs-Border-Element (11) zum Bereitstellen eines Sitzungsservers (10) eines Kommunikationsdienstanbieter-Netzwerks (1) mit Anwendungsdiensten, wobei das Anwendungssitzungs-Border-Element (11) eine Netzwerkschnittstelle (11a), welche für den Empfang einer von dem Sitzungsserver (10) für den Aufruf eines Anwendungsdienstes verwendeten Anwendungsdienstanforderung ausgelegt ist, und eine Steuereinheit (11b), welche für das Abbilden der Anwendungsdienstanforderung auf einen von einem fremden Anwendungsdienstanbieter bereitgestellten geeigneten Anwendungsdienst, das Abbilden der Anwendungsdienstanforderung auf eine Anwendungsdienstanforderung, welche an einen Anwendungsserver (20) oder an ein Anwendungssitzungs-Border-Element (21) des dem Anwendungsdienst zugeordneten fremden Anwendungsdienstanbieter gerichtet ist, das Aufrufen des besagten Anwendungsdienstes für den Aufbau einer Dienstsitzung zwischen dem Sitzungsserver (10) des Kommunikationsdienstanbieter-Netzwerks (1) und einem assoziierten Anwendungsserver (20) des fremden Anwendungsdienstanbieters, das Routen des mit der Dienstsitzung assoziierten Verkehrs über das Anwendungssitzungs-Border-Element (21) des fremden Anwendungsdienstanbieters an den besagten Anwendungsserver (20); das Weiterleiten des mit der besagten Dienstsitzung assoziierten Verkehrs an den besagten Anwendungsserver (20), und das Überwachen und Steuern der Dienstsitzung, um sicherzustellen, dass die Dienstsitzung einem Satz von Voreinstellparametern entspricht, ausgelegt ist, umfasst.

3. Anwendungssitzungs-Border-Element nach Anspruch 2,
**dadurch gekennzeichnet,**
**dass** die Steuereinheit (11b) weiterhin dazu ausgelegt ist, zu prüfen, ob der Sitzungsserver (10) und/oder ein Client (100, 101) des Kommunikationsdienstes (1) berechtigt ist, einen angeforderten Anwendungsdienst zu nutzen, und den Aufbau der Dienstsitzung zu verhindern, wenn dieser nicht hierzu berechtigt ist.

4. Anwendungssitzungs-Border-Element nach Anspruch 2,
**dadurch gekennzeichnet,**
**dass** die Steuereinheit (11b) weiterhin für das Bereitstellen von Anpassungen von Steuerprotokollen und/oder Medienformaten, die von dem Sitzungsserver (10) und dem Anwendungsserver (20) für die besagte Dienstsitzung verwendet werden, ausgelegt ist.

5. Anwendungssitzungs-Border-Element nach Anspruch 2,
**dadurch gekennzeichnet,**
**dass** die Steuereinheit (11b) weiterhin für die Steuerung von mit der besagten Dienstsitzung assoziierten Bandbreitenraten und/oder Dienstgütevereinbarungen als Voreinstellparameter ausgelegt ist.

6. Anwendungssitzungs-Border-Element nach Anspruch 2,
**dadurch gekennzeichnet,**
**dass** die Netzwerkschnittstelle (11a) weiterhin für die Kommunikation mit einem Sitzungsserver (10) eines Internetprotokoll-Multimedia-Subsystems oder, auf der Basis des Sitzungseinleitungsprotokolls, mit einem mit der Dienstsitzung assoziierten Netzwerkelement (10, 20, 21) ausgelegt ist.

7. Anwendungssitzungs-Border-Element nach Anspruch 2,
**dadurch gekennzeichnet,**
**dass** die Steuereinheit (11b) weiterhin für die Abwicklung des zwischen dem besagten Sitzungsserver (10) und dem besagten Anwendungsserver (20) gerouteten Verkehrs auf der Anwendungsschicht, der Signalisierungs/Steuerschicht und der Medienschicht ausgelegt ist.

8. Anwendungssitzungs-Border-Element nach Anspruch 2,
**dadurch gekennzeichnet,**
**dass** das Anwendungssitzungs-Border-Element (11) eine Datenbank (110) zur Speicherung von Abbildungsinformationen in Bezug auf die Abbildung der Anwendungsdienstanforderung umfasst.

## Revendications

1. Procédé permettant de fournir un serveur de session (10) d'un réseau de fournisseur de services de communication (1) avec des services d'application, le procédé comprenant les étapes suivantes :
acheminer une demande de service d'application utilisée par le serveur de session (10) pour appeler un service d'application vers un élément de session d'application en périphérie (11) dudit réseau de fournisseur de services de communication (1) ;
mettre en correspondance, au moyen de l'élément de session d'application en périphérie (11), la demande de service d'application avec un service d'application approprié fourni par un fournisseur de service d'application étranger ;
mettre en correspondance, au moyen de l'élément de session d'application en périphérie (11), la demande de service d'application avec une demande de service d'application dirigée vers un serveur d'application (20) ou un élément de session d'application en périphérie (21) du fournisseur de service d'application étranger attribué au service d'application ;
mettre en correspondance, au moyen de l'élément de session d'application en périphérie (21) du fournisseur de service d'application étranger, la demande de service d'application avec un serveur d'application (20) approprié dudit fournisseur de service d'application étranger ;
établir une session de service entre le serveur de session (10) du réseau de fournisseur de services de communication (1) et un serveur d'application (20) du fournisseur de service d'application étranger et acheminer le trafic associé à ladite session de service par l'intermédiaire de l'élément de session d'application en périphérie (11) vers ledit serveur d'application (20) ;
acheminer le trafic associé à ladite session de service par l'intermédiaire de l'élément de session d'application en périphérie (11) du réseau de fournisseur de services de communication (1) et par l'intermédiaire de l'élément de session d'application en périphérie (21) du fournisseur de service d'application étranger vers ledit serveur d'application (20) ; et
surveiller et contrôler, au moyen de l'élément de session d'application en périphérie (11), la session de service pour s'assurer que la session de service est conforme à un ensemble de paramètres préréglés.

2. Élément de session d'application en périphérie (11) pour fournir un serveur de session (10) d'un réseau de fournisseur de services de communication (1) avec des services d'application, dans lequel l'élément de session d'application en périphérie (11) comprend une interface réseau (11a) adaptée pour recevoir une demande de service d'application utilisée par le serveur de session (10) pour appeler un service d'application, et une unité de commande (11b) adaptée pour mettre en correspondance la demande de service d'application avec un service d'application approprié fourni par un fournisseur de service d'application étranger, mettre en correspondance la demande de service d'application avec une demande de service d'application dirigée vers un serveur d'application (20) ou un élément de session d'application en périphérie (21) du fournisseur de service d'application étranger attribué au service d'application, appeler ledit service d'application pour établir une session de service entre le serveur de session (10) du réseau de fournisseur de services de communication (1) et un serveur d'application (20) associé du fournisseur de service d'application étranger, acheminer le trafic associé à ladite session de service par l'intermédiaire de l'élément de session d'application en périphérie (21) du fournisseur de service d'application étranger vers ledit serveur d'application (20) ; transférer le trafic associé à ladite session de service vers ledit serveur d'application (20), et surveiller et contrôler la session de service pour s'assurer que la session de service est conforme à un ensemble de paramètres préréglés.

3. Élément de session d'application en périphérie selon la revendication 2,
**caractérisé en ce que**
l'unité de commande (11b) est en outre adaptée pour examiner si le serveur de session (10) et/ou un client (100, 101) du service de communication (1) est autorisé à utiliser un service d'application demandé et pour empêcher l'établissement de la session de service s'il n'est pas autorisé.

4. Élément de session d'application en périphérie selon la revendication 2,
**caractérisé en ce que**
l'unité de commande (11b) est en outre adaptée pour fournir des adaptations de protocoles de contrôle et/ou de formats de support utilisées par le serveur de session (10) et le serveur d'application (20) pour ladite session de service.

5. Élément de session d'application en périphérie selon la revendication 2,
**caractérisé en ce que**
l'unité de commande (11b) est en outre adaptée pour contrôler comme paramètres préréglés des débits de bande passante et/ou des accords de niveau de service associés à ladite session de service.

6. Élément de session d'application en périphérie selon la revendication 2,
**caractérisé en ce que**
l'interface réseau (11a) est en outre adaptée pour communiquer avec un serveur de session (10) d'un réseau de sous-système multimédia de protocole Internet ou, en se basant sur le protocole d'initiation de session, avec un élément de réseau (10, 20, 21) associé à la session de service.

7. Élément de session d'application en périphérie selon la revendication 2,
**caractérisé en ce que**
l'unité de commande (11b) est en outre adaptée pour gérer le trafic acheminé entre ledit serveur de session (10) et ledit serveur d'application (20) sur la couche d'application, la couche de signalisation/contrôle et la couche de support.

8. Élément de session d'application en périphérie selon la revendication 2,
**caractérisé en ce que**
l'élément de session d'application en périphérie (11) comprend une base de données (110) stockant des informations de mise en correspondance concernant la mise en correspondance de la demande de service d'application.
